(19) **Europäisches Patentamt**

**European Patent Office**

**Office européen des brevets**

(11) Veröffentlichungsnummer: **0 336 229**
**A1**

(12) **EUROPÄISCHE PATENTANMELDUNG**

(21) Anmeldenummer: **89105224.3**

(22) Anmeldetag: **23.03.89**

(51) Int. Cl.4: **C02F 1/72 , C02F 1/74 , C02F 1/52**

(30) Priorität: **08.04.88 DE 3811789**

(43) Veröffentlichungstag der Anmeldung:
**11.10.89 Patentblatt 89/41**

(84) Benannte Vertragsstaaten:
**AT BE CH DE GR LI NL SE**

(71) Anmelder: **LAYER + KNÖDLER ABWASSERTECHNIK + KUNSTSTOFFBAU GMBH**
**Max-Eyth-Strasse 19**
**D-7050 Waiblingen(DE)**

(72) Erfinder: **Hinze, Harald, Dipl.-Ing.**
**Bismarckstrasse 17**
**D-7052 Schwaikheim(DE)**
Erfinder: **Bronner, Helmut**
**Welzheimer Strasse 5**
**D-7012 Fellbach-Öffingen(DE)**

(74) Vertreter: **Patentanwälte RUFF, BEIER und SCHÖNDORF**
**Neckarstrasse 50**
**D-7000 Stuttgart 1(DE)**

(54) **Verfahren zum Entfernen von Sulfiden aus Abwässern.**

(57) Die Erfindung betrifft ein Verfahren zum Entfernen von Sulfiden aus Abwässern durch Oxidation dieser Sulfide. Ein Abbau der Sulfid-Verunreinigungen der Abwässer läßt sich innerhalb kurzer Zeit zuverlässig erreichen, wenn zumindest ein Teil der im Abwasser enthaltenen Sulfide mit Kaliumpermanganat oxidiert wird. Das erfindungsgemäße Verfahren läßt sich bei niedrigen und hohen Sulfidkonzentrationen einsetzen und ist auch in Kombination mit anderen Oxidationsmitteln anwendbar.

**EP 0 336 229 A1**

## Verfahren zum Entfernen von Sulfiden aus Abwässern

Die vorliegende Erfindung betrifft ein Verfahren zum Entfernen von Sulfiden aus Abwässern durch Oxidation dieser Sulfide.

Sulfidhaltige Abwässer können anorganische und/oder organische Sulfide enthalten, wobei ein organisch gebundenes Sulfid wesentlich schwerer oxidierbar ist als ein anorganisches Sulfid. So werden z. B. Dialkylsulfide, Dialkyldisulfide und Mercaptane sehr langsam oxidiert, sie befinden sich aber meist nur in geringen Mengen in sulfidhaltigen Abwässern. Abgesehen von der starken Geruchsbelästigung wirken Sulfide darüberhinaus stark reduzierend und führen somit zu einer Verarmung der Abwässer an Sauerstoff. Daneben können sulfidhaltige Abwässer auch einen korrodierenden Einfluß, insbesondere auf Beton, besitzen. Weiterhin besitzt der aus dem Sulfid entstehende Schwefelwasserstoff hohe Giftigkeit.

Anorganische Sulfide liegen je nach pH-Wert des Abwassers in verschiedener Form vor. In alkalischer Lösung sind das Hydrogensulfid ($HS^-$) bzw. das Sulfid ($S^{2-}$) stabil, während sich bei sauren pH-Werten Schwefelwasserstoff ($H_2S$) bildet, der in gelöster Form im Abwasser enthalten ist bzw. auch gasförmig aus dem Abwasser entweicht. Schwefelwasserstoff bzw. Sulfide gelangen entweder aus industriellen Prozessen direkt ins Abwasser, sie können aber auch durch bakterielle Vorgänge im Abwasser gebildet werden. Besonders stark mit Sulfiden belastete Abwässer fallen bei der Verarbeitung von Häuten in Gerbereien an. Außerdem ist die dort zu reinigende Abwassermenge sehr groß. Aufgrund des dominierenden Einflusses der Chemikalien, die im Äscherprozeß eingesetzt werden, sind die vereinigten Abwässer stets alkalisch (pH>10). Eine Neutralisierung dieser Abwässer durch Zugabe von Mineralsäuren kommt jedoch nicht in Frage, da durch die im Wasser enthaltenen Sulfide eine sehr starke $H_2S$-Entwicklung auftreten würde. Typische sulfidhaltige Abwässer von Gerbereien können zwischen 500 und 2000 mg Sulfid pro Liter Abwasser enthalten. Durch diesen hohen Sulfidgehalt wirken die Abwässer stark reduzierend.

Eine Hauptschwierigkeit der Reinigung von Gerbereiabwässern liegt also in der Beseitigung des Sulfidschwefels. Eine bekannte Methode dafür stellt die Oxidation der Sulfide dar. Dabei erfolgt bei anorganischem Schwefel die Reaktion in saurem oder neutralem Milieu bis zur Stufe des elementaren Schwefels, während in stärker basischen Lösungen die Oxidation bis zur Stufe des Hydrogensulfats bzw. Sulfats weiterläuft. Eine Möglichkeit für die Durchführung einer solchen Oxidation stellt das starke Einblasen von Luft in das Wasser dar, wobei der in der Luft enthaltene Sauerstoff das Oxidationsmittel ist. Der Nachteil dieses Verfahrens ist, daß man bei der Aufbereitung stark sulfidhaltiger Abwässer 12 bis 36 Stunden mit Luftsauerstoff belüften muß, bis der Sulfidgehalt auf zulässige Konzentrationen abgesunken ist. So sinkt bei diesem Verfahren die Sulfidkonzentration eines Gerbereiabflusses mit ca. 1000 mg Sulfid / l Abwasser zwar recht schnell auf eine Konzentration von ca. 200 mg/l, aber eine weitere Absenkung der Sulfidkonzentration ist schwierig und zeitraubend. Die zulässige Konzentration für Sulfid beträgt nämlich 2 mg/l Abwasser. Außerdem erfordert das Verfahren des Einblasens von Luft einen hohen apparativen Aufwand, zumal die aus dem Abwasser austretende Luft ebenfalls aufbereitet werden muß.

Ein weiteres bekanntes Verfahren zur Oxidation sulfidhaltiger Abwässer stellt die Oxidation mit Wasserstoffperoxid ($H_2O_2$) dar. Solche Verfahren, bei denen auch Metallkatalysatoren verwendet werden können, werden z. B. in der europäischen Anmeldung EP 0086592 oder der US-Patentschrift 29 22 93 beschrieben. Verwendet man Wasserstoffperoxid jedoch zur Sulfidoxidation stark belasteter Gerbereiabwässer, benötigt diese Oxidation einen Zeitraum von ca. 1 bis 3 Stunden.

Die Erfindung hat somit die Aufgabe, ein Verfahren zur Verfügung zu stellen, bei dem die Oxidation der Sulfide in Abwässern so verbessert wird, daß bei Sulfid-Verunreinigungen der Abwässer innerhalb einer kurzen Zeit der zulässige Grenzwert für Sulfid zuverlässig erreicht bzw. unterschritten wird.

Die Aufgabe wird dadurch gelöst, daß als Oxidationsmittel für die im Abwasser enthaltenen Sulfide Kaliumpermanganat verwendet wird (Kaliumpermanganat ist ein starkes Oxidationsmittel und kann sogar Wasserstoffperoxid in saurer Lösung zu Sauerstoff oxidieren). Der Einsatz von Kaliumpermangant bringt eine unerwartete Verbesserung der Ergebnisse der Sulfidoxidation. Das erfindungsgemäße Verfahren ist auf jede auftretende Sulfidbelastung anwendbar, seine Vorteile zeigen sich also nicht nur bei niedrigen, sondern auch bei hohen Sulfidkonzentrationen, wie sie beispielsweise in den Abwässern von Gerbereien auftreten können. Bei Sulfidbelastungen von über 100 mg/l, insbesondere 50 mg/l wird vorzugsweise eine Vorbehandlung, z. B. mit $H_2O_2$, durchgeführt. Die Oxidation mit $KMnO_4$ erfolgt vorzugsweise bei Belastungen von 100 mg und weniger, insbesondere 10 bis 50 mg/l oder weniger. Das Kaliumpermanganat kann dem Abwasser entweder in fester oder gelöster Form zugegeben werden. Einsatzmengen an $KMnO_4$ liegen in der Regel bei maximal etwa 300 g/m³ Abwasser, normalerweise darunter, vorzugsweise unter ca. 150 g/m³. Übliche Zugabemengen für Kaliumpermanganat nach einer Vorbehandlung oder bei sehr geringer Belastung liegen vorzugsweise zwischen 5 g und 20 g pro m³ Abwasser. Das erfindungsgemäße Verfahren ist aber nicht auf diese Mengenbereiche beschränkt.

Bei der Berechnung der KMnO₄ -Menge werden ggf. vorhandene weiter oxidierbare Verunreinigungen ebenfalls berücksichtigt.

Eine Beschränkung des Verfahrens auf einen bestimmten pH-Bereich ist ebenfalls nicht gegeben. Eine bevorzugte Ausführungsform des Verfahrens ist jedoch diejenige, bei der die Oxidation in alkalischem Medium, insbesondere bei pH größer 10 durchgeführt wird. Dabei wird das Entweichen von gasförmigen $H_2S$ vermieden.Dies ist insbesondere dann der Fall, wenn es sich bei den Abwässern um sulfidhaltige Abwässer, z. B aus Gerbereien, handelt, die wie oben schon erwähnt einen stark alkalischen pH-Wert besitzen. Der pH-Bereich wird vorzugsweise bei 12.0 bis 13 gehalten.

Da das Kaliumpermanganat, wie es im erfindungsgemäßen Verfahren verwendet wird, ein hohes Oxidationspotential aufweist, kann es mit Vorteil in einem letzten Oxidationsschritt eingesetzt werden. In diesem letzten Oxidationsschritt bewirkt es, daß die Sulfidwerte der restlichen, zum Teil schwer oder nur langsam oxidierbaren Sulfide innerhalb kurzer Zeit auf den geforderten Grenzwert absinken. Dieser Einsatz nach der Erfindung hat den entscheidenden Vorteil, daß eventuell vorgeschaltete Oxidationsverfahren nur solange durchgeführt werden müssen, bis der bei ihnen mögliche optimale bzw. maximale Sulfidabbau erreicht ist. Für die restlichen schwerer oxidierbaren Sulfide kommt dann Kaliumpermanganat zu Einsatz. So werden nach einer weiteren bevorzugten Ausgestaltung des erfindungsgemäßen Verfahrens die Abwässer mit Wasserstoffperoxid vorbehandelt. Besonders vorteilhaft ist es dabei, wenn diese Vorbehandlung mit einem Molverhältnis von Wasserstoffperoxid zu Sulfidmenge von größer 4:1 bis 6:1 durchgeführt wird. Betrachtet man die Redoxgleichung von Wasserstoffperoxid und Sulfid in alkalischem Milieu:

$$4\,H_2O_2 + S^{2-} \rightleftharpoons SO_4^{2-} + 2\,H_2O$$

so ergibt sich für diese Reaktion ein stöchiometrisches Molverhältnis $H_2O_2 : S^{2-}$ von 4:1. Vorteilhafter für die Vorbehandlung der sulfidhaltigen Abwässer ist im Rahmen der Erfindung aber ein Überschuß an $H_2O_2$. Dieser liegt vorzugsweise zwischen 20 und 50 %, insbesondere aber zwischen 30 und 40 %. Weiterhin ist es vorteilhaft, wenn die Vorbehandlung bei einem pH-Wert nicht unter 9 vorgenommen wird, damit die Oxidation, wie gewünscht, bis zur Stufe des Sulfats weiterläuft. Wasserstoffperoxid ist eine schwache Säure, so daß bei seiner Zugabe im Überschuß der pH-Wert zu niedrigen Werten verschoben wird. Nach dem Verbrauch des Wasserstoffperoxids steigt der pH-Wert dann wieder an. Es kann bei dieser Vorbehandlungvorgesehen sein, den pH-Wert während der Vorbehandlung zu überwachen, indem z. B. der pH-Wert des Abwassers durch die Zugabe von Alkalien genügend alkalisch gehalten werden kann oder die Zugabe von $H_2O_2$ dem Verbrauch angepaßt wird. Durch diese vorteilhafte Wahl des Molverhältnisses und des pH-Werts kann es sogar möglich sein, daß eine weitere Behandlung mit Kaliumpermanganat gar nicht mehr nötig ist. Eine weitere Möglichkeit die sulfidhaltigen Abwässer nach dem erfindungsgemäßen Verfahren vorzubehandeln, stellt die Oxidation mit Luftsauerstoff dar. Diese Oxidation mit Luftsauerstoff kann direkt vor der Oxidation mit Kaliumpermanganat erfolgen, ggf. kann sie auch zusätzlich vor einer Oxidation mit Wasserstoffperoxid durchgeführt werden, was in vielen Fällen bevorzugt ist.

Anstelle einer Oxidation mit Luftsauerstoff oder zusätzlich zu dieser können zu Beginn des gesamten Verfahrens ausfällbare Sulfide mit Metallionen, die schwerlösliche Sulfide bilden können, ausgefällt werden. Solche Metallionen sind bevorzugt Elemente der ersten Übergangsreihe (3 d-Metalle) und von diesen insbesondere Eisen oder Kupfer. Auf diese Weise lassen sich Oxidationsmittel einsparen und die Sulfide teilweise in fester Form abtrennen, insbesondere abfiltrieren. Allerdings funktioniert die weitere Oxidationsreaktion auch in Anwesenheit der ausgefällten schwerlöslichen Sulfide. Möglicherweise besitzen die anwesenden Metallionen sogar einen katalytischen Einfluß auf diese Oxidationsreaktion.

Nach der Erfindung ist es möglich, das verwendete Kaliumpermanganat sowie die anderen Oxidationsmittel, d.h. Wasserstoffperoxid und/oder Luftsauerstoff, und die zur Ausfällung der schwerlöslichen Sulfide eingesetzten Metallionen, auf einmal den Abwässern zuzugeben. Bevorzugt ist jedoch eine allmähliche oder portionsweise Zugabe oder eine kontinuierliche Zugabe.

Die vorliegende Erfindung ist, wie schon erwähnt auf jede Sulfidbelastung, auch bei hohen Ausgangskonzentrationen im Abwasser anwendbar. Dabei wird sowohl anorganisch als auch organisch gebundener Schwefel oxidiert. Das Verfahren kann überall angewendet werden, wo sulfidhaltige Abwässer anfallen. Dies ist besonders bei Gerbereien, bei der Pelzverarbeitung (-veredlung), bei der Textilveredlung sowie in Schlachthöfen und Abdeckereien der Fall.

Üblicherweise aber nicht notwendigerweise wird das Verfahren so durchgeführt, daß nach der Messung des Sulfidgehaltes des Abwassers eine Vorbehandlung stattfindet. Diese kann in einer Oxidation des Abwassers mit Luftsauerstoff und/oder Wasserstoffperoxid bestehen, wobei noch eine Fällungsreaktion schwerlöslicher Sulfide vorausgehen kann. Oft reicht eine Vorbehandlung des Abwassers durch Oxidation mit Wasserstoffperoxid aus, zumal wenn die apparativen Voraussetzungen für eine Luftsauerstoff-Behandlung nicht gegeben sind. Dabei wird Wasserstoffperoxid vorzugsweise kontinuierlich im Überschuß zugegeben. Die Reaktion wird durch Potentialmessung laufend verfolgt. Der Wert für das Potential steigt von ca. -200 mV kontinuierlich bis auf positive Werte, insbesondere im Bereich von ca + 200 bis 300 mV an. Nach kurzer Zeit ist diese schnelle Reaktion beendet und es tritt kein weiterer Potentialanstieg ein. Nun wird das Kaliumpermanganat, vorzugsweise in Lösung, zugegeben. Anstelle des bevorzugten Kaliumpermanganats kann hier auch der Einsatz von Peroxodisulfaten möglich sein. Innerhalb von 15 bis 30 Minuten sinkt der Sulfidgehalt der Abwässer auf unter 0,5 mg/l (den meßbaren Grenzwert für Sulfid in Abwässern) also einen überraschend niedrigen Wert nach so kurzer Reaktionszeit. Reaktionstemperatur ist die Temperatur des Abwassers, die während der exothermen Reaktion eventuell leicht ansteigt.

Weitere Merkmale und Vorteile ergeben sich aus der nachfolgenden Beschreibung von bevorzugten Ausführungen in den Beispielen. Hierbei können die einzelnen Merkmale jeweils für sich alleine oder zu mehreren in Kombination bei den Ausführungsformen verwirklicht sein.

## Beispiel 1

Wenig belastetes Abwasser mit einem Sulfidgehalt von 90 mg/l wurde mit 1%iger $KMnO_4$ -Lösung behandelt. Dabei wurden 750 l Abwasser schrittweise mit 20 l 1%iger $KMnO_4$ -Lösung versezt. Nach 45 Minuten war der Sulfidgehalt des Abwassers auf 1 mg/l gesunken.

|  | unbehandeltes Wasser | behandeltes Wasser |
|---|---|---|
| Sulfidgehalt | 90 mg/l | 1 mg/l |
| pH-Wert | 12,5 | 12,3 |
| Aussehen | hellbraun, trübe | braun, trübe |
| Geruch | stark faulig | faulig |
| Temperatur | 23 °C | 25 °C |

## Beispiel 2

Stark belastetes Gerbereiabwasser wurde mit einer Versuchsanlage mit Luftsauerstoff vorbehandelt. Das Abwasser hatte vor dieser Behandlung einen Sulfidgehalt von 750 mg/l. Nach einem Zeitraum von 10 h wurde das Durchblasen der Luft abgebrochen und das Abwasser volumen von 800 l wurde mit 10 l einer 1%igen $KMnO_4$ -Lösung schrittweise versetzt.

|  | unbehandeltes Abwasser | behandeltes Abwasser |
|---|---|---|
| Sulfidgehalt | 750 mg/l | 20,5 mg/l |
| pH-Wert | 12,8 | 12,5 |
| Aussehen | ockerfarben, trübe | hellbraun, trübe |
| Geruch | stark, faulig | nicht faulig |
| Temperatur | 21 °C | 22 °C |

## Beispiel 3

Gerbereiabwasser mit einem Sulfidgehalt von 1200 mg/l wurde mit 35 %igem Wasserstoffperoxid und dann mit 1 %iger $KMnO_4$ -Lösung behandelt. Dazu wurden 1000 l Abwasser schrittweise zuerst mit 16 l 35 %iger $H_2O_2$ versetzt, bis sich das gleichzeitig gemessene elektrochemische Potential nicht mehr änderte. Dann wurden 4 x 0,5 l 1 %ige $KMnO_4$ -Lösung zugegeben.

|  | unbehandeltes Abwasser | behandeltes Abwasser |
|---|---|---|
| Sulfidgehalt | 1200 mg/l | 0,5 mg/l |
| pH-Wert | 12,5 | 12,1 |
| Aussehen | graugrün, trübe | hellbraun, trübe |
| Geruch | stark faulig | leicht faulig |

Beispiel 4

Gerbereiabwasser mit einem Sulfidgehalt von 1000 mg/l wurde eine Probe von 400 ml entnommen. Diese Probe wurde in kontinuierlichen Schritten mit 6 ml 35%iger $H_2O_2$ versetzt, bis kein weiterer Anstieg des gleichzeitig gemessenen elektrochemischen Potentials mehr zu beobachten war. Dann wurden der Probenlösung 0,4 ml 2%ige $KMnO_4$-Lösung zugegeben.

|  | unbehandeltes Abwasser | behandeltes Abwasser |
|---|---|---|
| Sulfidgehalt | 1000 mg/l | <0,5 mg/l |
| pH-Wert | 12,7 | 12,1 |
| Aussehen | ockerfarben, trübe | hellbraun, trübe |
| Geruch | stark, faulig | leicht faulig |
| Temperatur | 22 °C | 22 °C |

**Beispiel 5**

Gerbereiabwasser mit einem Sulfidgehalt von 380 mg/l wurde eine Probe von 400 ml entnommen. Diese Probe wurde mit 0,5 ml $Fe(III)Cl_3$-Lösung versetzt, worauf sich ein schwarzer Niederschlag bildete. Anschließend wurde der pH-Wert der Lösung auf ca. 8,5 mit HCl eingestellt, um ein Flockungsmittel zusetzen zu können. Dann wurde der entstandene Niederschlag abfiltiert und der pH-Wert der Probenlösung mit 0,1 NaOH wieder auf 10,0 eingestellt. Dieser Lösung wurde dann kontinuierlich $H_2O_2$ und bei gemessener Potentialkonstanz 2 %ige $KMnO_4$-Lösung zugegeben.

|  | unbehandeltes Abwasser | behandeltes Abwasser |
|---|---|---|
| Sulfidgehalt | 380 mg/l | 0,5 mg/l |
| pH-Wert | 12,6 | 9,0 |
| Aussehen | grau-grün | gelblich grün |
| Geruch | stark faulend | nur leicht unangenehm |
| Temperatur | 22 °C | 22 °C |

**Ansprüche**

1. Verfahren zum Entfernen von Sulfiden aus Abwässern durch Oxidation der Sulfide, dadurch gekennzeichnet, daß mindestens ein Teil der im Abwasser enthaltenen Sulfide mit Kaliumpermanganat oxidiert wird.

2. Verfahren nach Anspruch 1, dadurch gekennzeichnet, daß die Oxidation in alkalischem Medium, insbesondere bei pH größer 10 durchgeführt wird.

3. Verfahren nach Anspruch 1 oder 2, dadurch gekennzeichnet, daß die Behandlung mit Kaliumpermanganat mindestens in einem letzten Oxidationsschritt durchgeführt wird.

4. Verfahren nach einem der vorhergehenden Ansprüche, dadurch gekennzeichnet, daß zum Vorbehandeln der Abwässer eine Oxidation mit Wasserstoffperoxid durchgeführt wird.

5. Verfahren nach Anspruch 4, dadurch gekennzeichnet, daß die Oxidation mit Überschuß an Wasserstoffperoxid, vorzugsweise einem Molverhältnis von Wasserstoffperoxid zur Sulfidmenge größer 4:1, insbesondere zwischen größer 5:1 bis 6:1 durchgeführt wird.

6. Verfahren nach einem der vorhergehenden Ansprüche, dadurch gekennzeichnet, daß die Abwässer zuerst, ggf. auch vor einer Oxidation mit Wasserstoffperoxid, mit Luftsauerstoff vorbehandelt werden.

7. Verfahren nach einem der vorhergehenden Ansprüche, dadurch gekennzeichnet, daß ausfällbare Sulfide mit Metallionen, die schwerlösliche Sulfide ergeben, zu Beginn des Verfahrens ausgefällt und vorzugsweise abgetrennt werden.

8. Verfahren nach Anspruch 7, dadurch gekennzeichnet, daß als Metallionen Elemente der ersten Übergangsreihe (3 d-Metalle), insbesondere Eisen oder Kupfer, verwendet werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,P | JOURNAL WATER POLLUTION CONTROL FEDERATION (JWPFA), Band 60, Nr. 7, Juli 1988, Seiten 1259-1263; F. CADENA et al.: "Evaluation of chemical oxidizers for hydrogen sulfide control" * Seite 1259, rechte Spalte, Zeilen 27-31: "Sulfide-induced odor control usw."; Seite 1260, rechte Spalte, Absatz 3 * | 1 | C 02 F 1/72 C 02 F 1/74 C 02 F 1/52 |
| X | U.S. ENVIRONMENTAL PROTECTION AGENCY TECHNOLOGY TRANSFER REPORT, Nr. 625/1-74-005, Oktober 1974, 142 Seiten, Washington, US; "Process design manual for sulfide control in sanitary sewerage systems" * Seite 5-41, Kapitel 5.2.7 * | 1 | |
| A | * Seite 5-33 * | 7,8 | |
| A | FR-A- 457 303 (DRECHSLER) * Seite 1, Zeilen 7-12,43-60 * | 1,3,6-8 | |
| A,D | EP-A-0 086 592 (INTEROX AMERICA) * Ansprüche 1,6 * | 4,8 | |
| A | GWF WASSER ABWASSER, Band 120, Nr. 6, 1979, Seiten 259-268; U. ZIETZ: "Die Beseitigung von geruchsaktivem Schwefelwasserstoff aus dem Abwasser von Kläranlagen" * Seiten 261-265, linke Spalte; Seite 267, Tabelle 6 * | 1 | |

**RECHERCHIERTE SACHGEBIETE (Int. Cl.4)**

C 02 F

Der vorliegende Recherchenbericht wurde für alle Patentansprüche erstellt

| Recherchenort | Abschlußdatum der Recherche | Prüfer |
|---|---|---|
| DEN HAAG | 19-06-1989 | KASPERS H.M.C. |